# EUROPÄISCHE PATENTANMELDUNG

(11) **EP 0 871 024 A2**
(43) Veröffentlichungstag der Anmeldung: **14.10.1998**
(21) Anmeldenummer: 98100195.1
(22) Anmeldetag: 08.01.1998
(51) Int. Cl.: G01M 3/36

(54) **Verfahren und Einrichtung zur Überprüfung der Ventildichtheit gefüllter Ventilsäcke**

(30) Priorität: 08.04.1997 DE 19714314
(71) Anmelder: KALI UND SALZ BETEILIGUNGS AKTIENGESELLSCHAFT, D-34111 Kassel (DE)
(72) Erfinder: Fuhrich, Ulrich, 31162 Bad Salzdetfurth (DE); Engelmann, Gustav, 31162 Bad Salzdetfurth (DE)

(57) **Zusammenfassung**

Die Erfindung betrifft ein Verfahren und eine Einrichtung zur Überprüfung der Ventildichtheit gefüllter Ventilsäcke. Erfindungsgemäß werden die auf einer Transporteinrichtung liegenden Säcke mit der quer zur Transportrichtung zeigenden Ventilöffnungsseite derart mit einem Druckluftimpuls über eine Düse beaufschlagt, daß die freie Ventilfläche zielgerichtet angeströmt wird und bei einem undichten Sackventil Druckluft in den Sack strömt und eine merkliche Ausdehnung des Sackes bewirkt wird.

## Beschreibung

Nach betrieblicher Praxis werden pulverförmige oder gekörnte Schüttgüter u.a. in Ventilsäcken verschiedener Größe verpackt und in diesen Verpackungen vertrieben. Die Ventile werden nach dem maschinellen Befüllen dieser Säcke luftdicht versiegelt. Dies geschieht dadurch, daß die Ventile z.B. innen mit einem Heißleim, einem sogenannten Hot Melt-Streifen, beschichtet oder die Säcke mit einem Thermoventil ausgerüstet sind und durch äußere Einwirkung von Druck und Temperatur auf diese Weise verklebt werden. Die Versiegelung, bzw. das Verschweißen erfolgen ebenfalls maschinell. Diese maschinelle Versiegelung gewährleistet keine absolute Ventildichtheit bei jedem Sack, so daß eine abschließende Dichtheitskontrolle zwingend erforderlich ist.

Die Kontrolle auf Dichtheit erfolgt häufig manuell durch Aufschlagen mit der Hand auf die Sackoberfläche unter gleichzeitiger Beobachtung des Ventils durch einen sogenannten Toucher. Dieses Verfahren ist ungenau und sehr kostenintensiv.

Nach dem Stand der Technik sind mechanische Verfahren zur Prüfung der Dichtheit von z. B. Foliensäcken bekannt. Nach EP 580 063 werden Teststößel mit einem bestimmten Druck gegen die Sackwand geführt, wobei die Eindringtiefe als Maß für die Dichtheit dient.
Eine weitere Möglichkeit, luftdicht verschlossene Behältnisse auf Dichtheit zu prüfen, wird in der DE 400 98 38 beschrieben. Die Behältnisse werden einem entsprechend bemessenen Über- oder Unterdruck ausgesetzt und Formänderungen der Behältnisse festgestellt. Diese Formänderungen deuten auf eine Undichtheit hin und solche als undicht festgestellten Behältnisse oder dessen als undicht festgestellter Verschluß werden gekennzeichnet. Häufig werden die Verpackungen oder Behälter in einer gesonderten Druckkammer getestet. (EP 473 173, EP 277 458)

Die bekannten Dichtheitstestverfahren sind aufwendig und stellen das Vorhandensein eines Lecks in der Behälterwand der zu prüfenden Verpackung zwar fest, aber lokalisieren die Leckstelle nicht. Die Dichtheit des Ventils eines Ventilsackes während des Transportlaufs läßt sich auf diese Weise nicht feststellen.
Es ist daher die Aufgabe zu lösen, ein kontinuierlich arbeitendes Verfahren zu finden, mit dem auf einfache, schnelle und zuverlässige Art und Weise gefüllte und verschlossene Verpackungen in der Art eines Ventilsackes auf Dichtheit des Sackventils geprüft werden können, ohne den Sacklauf auf der Transporteinrichtung wesentlich zu unterbrechen. Erfindungsgemäß wird das Sackventil beim Transport der Ventilsäcke z.B. auf einem Band über eine Düse gezielt mit Druckluft beaufschlagt. Bei einem nicht geschlossenen Ventil strömt nun Druckluft in den Sack und sorgt für eine merkliche Ausdehnung des Sackes. Die Verformungen der Sackoberfläche können nun mit Hilfe verschiedener Möglichkeiten erfaßt und abgefragt werden. Denkbar sind z. B. Initiatoren, Lichttaster oder eine Hebelplatte. Wird eine merkliche Verformung festgestellt, so können defekte Säcke ausgeschleust, nachgeschweißt und wieder in den Transportweg eingebracht werden.
Die erforderliche Druckluft wird erfindungsgemäß in Form eines kurzzeitigen Impulses auf das Ventil gerichtet. Dazu eignen sich Düsen verschiedener Art. Wesentlich dabei ist, daß der Druckluftimpuls die vorhandene freie Ventilfläche erfaßt. Dies kann durch die Wahl der Düse, z.B. eine Ringdüse oder eine Flachstrahldüse sowie durch den Abstand der Düse von der freien Ventilfläche beeinflußt werden. Der Druckluftimpuls muß dabei zeitlich und in seiner Stärke so bemessen sein, daß sich der Sack entsprechend seinen Abmessungen während des Transports bei undichtem Ventil meßbar ausdehnen kann. Die erfindungsgemäße Einrichtung zur Überprüfung der Ventildichtheit gefüllter Ventilsäcke 1 umfaßt zunächst eine Düse 4 mit einem Druckluftanschluß, die so an der Tragkonstruktion der Transporteinrichtung 2 angeordnet ist, daß der aus der Düse austretende impulsartige Luftstrom auf die freie Ventilfläche des auf der Transporteinrichtung liegenden Sackes 1 trifft. Der Sack liegt dabei regelmäßig auf seiner Flachseite, so daß das Ventil 3 nach einer Seite quer zur Transportrichtung zeigt. Die Druckluftdüsenöffnungen sind nun ebenfalls quer zur Transportrichtung auf die freie Ventilfläche gerichtet.

Zur Erfassung der Ausdehnung des Sackes ist im Bereich der Teststrecke oberhalb des sich gerade dort befindlichen Sackes ein Sensor 5 installiert, der auf die möglichen Veränderungen des Niveaus der Sackoberfläche anspricht und ein Signal abgibt, welches weiterverarbeitet wird und einen Mechanismus 8 auslöst, der den defekten Sack aus der Transportstrecke ausschleust.

### Ausführungsbeispiel:

In einer Verpackungsanlage für körniges Schüttgut werden die auf einem laufenden Transportband 2 liegenden gefüllten und verschlossenen Ventilsäcke 1, z.B. 10 l- oder 20 l-Säcke, (Gewicht ca. 5 kg; Höhe 9cm, Länge 41 cm, Breite 27cm bzw. Gewicht ca. 10kg; Höhe 15cm, Länge 46cm, Breite 31 cm), mit Hilfe einer Lichtschranke 6 an einer definierten Stelle mit einem Stopper 7 angehalten. Die Druckluftdüse 4 befindet sich in diesem Augenblick gerade in Flucht mit der freien Ventilfläche des Sackes. Der Abstand zwischen Düsenaustritt und Sackventil beträgt etwa 5 cm.
Das Sackventil wird nun impulsartig mit Druckluft von 3-10 bar, vorzugsweise 5-7 bar angeblasen. Die Impulsdauer beträgt je nach Sackabmessungen 0,5 - 3 sec., beispielsweise ca. 1 sec. Bei nicht geschlossenem Sackventil 3 strömt die Druckluft in den Sack 1 und sorgt für eine Ausdehnung des Sackes, die im Beispiel mit einem Lichttaster 5 erkannt wird. Es wird ein Signal erzeugt, welches einen 'pusher' (Sackabschieber 8) auslöst, der den defekten Sack aus dem Transportweg ausschleust.
Der Sack wird nachgeschweißt und wieder in den Transportweg eingebracht.
Die Empfindlichkeit des Lichttasters 5 kann mit bekannten Mitteln eingestellt werden.
Durch die erfindungsgemäße Lehre ist es auf einfache Art und Weise möglich, die Dichtheit der Ventilsäcke während des Transportlaufs ohne Stau zu überprüfen. Die manuelle einseitige Tätigkeit eines Touchers entfällt.

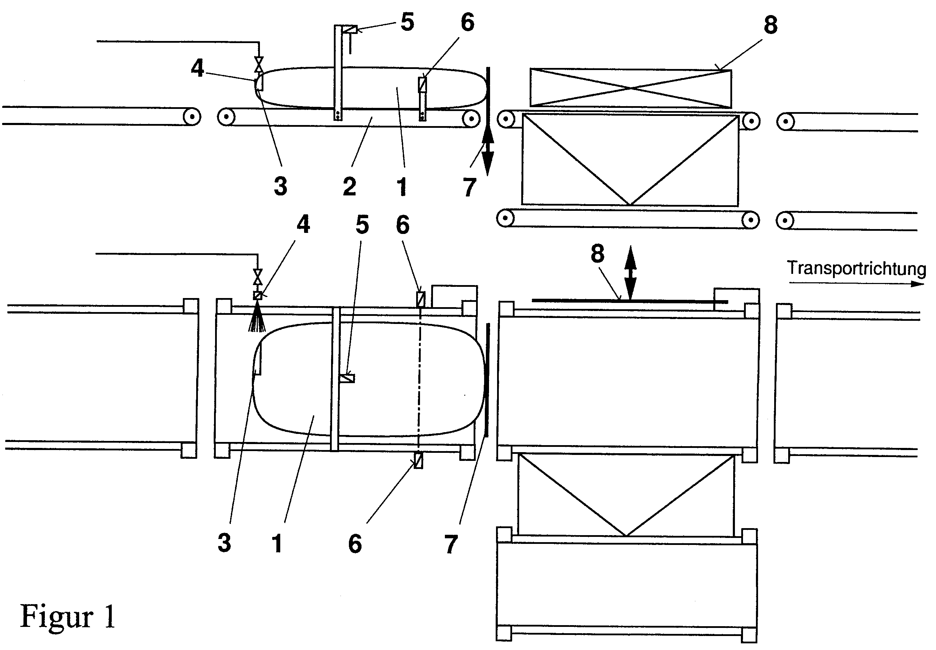

## Patentansprüche

1. Verfahren zur Überprüfung der Ventildichtheit gefüllter Ventilsäcke durch Druckbeaufschlagung, dadurch gekennzeichnet, daß die auf einer Transporteinrichtung liegenden Säcke mit der quer zur Transportrichtung zeigenden Ventilöffnungsseite derart mit Druckluft beaufschlagt werden, daß über eine Düse die freie Sackventilfläche zielgerichtet mit einem kurzen Druckluftimpuls angeströmt wird und bei einem undichten Sackventil Druckluft in den Sack strömt und eine merkliche Ausdehnung des Sackes bewirkt.

2. Verfahren nach Anspruch 1, dadurch gekennzeichnet, daß zur Auslösung des Druckluftimpulses die Transporteinrichtung mit den Säcken an einer definierten Stelle, die durch die Flucht der Ventilöffnung mit der Düsenöffnung bestimmt wird, für die Dauer des Druckluftimpulses angehalten wird.

3. Verfahren nach Anspruch 2, dadurch gekennzeichnet, daß der Transport der Säcke z.B. mit Hilfe einer Lichtschranke unterbrochen wird.

4. Verfahren nach Anspruch 1, dadurch gekennzeichnet, daß der Druckluftimpuls etwa 0,5 - 3 sec, vorzugsweise ca. 1 sec andauert.

5. Verfahren nach Ansprüchen 1 und 4, dadurch gekennzeichnet, daß der Druckluftimpuls mit einer Stärke von 3 - 10 bar, vorzugsweise 5 - 7 bar erfolgt.

6. Verfahren nach Anspruch 1, dadurch gekennzeichnet, daß ein Ausdehnen der Ventilsackoberflache mit einem Sensor, zum Beispiel mit einem mechanischen Tastorgan, einem Initiator oder einem Lichttaster erkannt wird.

7. Verfahren nach Ansprüchen 1 und 6, dadurch gekennzeichnet, daß der Sensor ein Signal erzeugt, das bei einem undichten Sackventil einen Mechanismus auslöst, der den Sack aus dem Transportweg ausschleust.

8. Verfahren nach Ansprüchen 1, 6 und 7, dadurch gekennzeichnet, daß die Empfindlichkeit des Sensors eingestellt werden kann.

9. Einrichtung zur Überprüfung der Ventildichtheit gefüllter Ventilsäcke (1) während des Transportlaufs auf einer Transportvorrichtung, so daß das Ventil (3) nach einer Seite quer zur Transportrichtung zeigt, dadurch gekennzeichnet,
• daß eine Düse (4) mit Druckluftanschluß (2) so an der Tragkonstruktion der Transporteinrichtung (2) angeordnet ist, daß die Düsenaustrittsöffnung im Moment des Vorbeilaufs des Sackventils (3) genau auf die freie Fläche des Ventils gerichtet ist und
• daß an der Tragkonstruktion oberhalb des sich darunter befindlichen Sackes (1) ein Sensor (5) zur Erfassung der Sackausdehnung angeordnet ist.

10. Einrichtung nach Anspruch 9, dadurch gekennzeichnet, daß die Düse (4) eine Ring- oder Flachdüse ist.

11. Einrichtung nach Ansprüchen 9 und 10, dadurch gekennzeichnet, daß der Abstand zwischen Düsenaustritt und Sackventil etwa 5 cm beträgt.
